# EUROPEAN PATENT SPECIFICATION

(11) **EP 1 254 187 B1**
(45) Date of publication and mention of the grant of the patent: **18.10.2006**
(21) Application number: 01948990.5
(22) Date of filing: 31.01.2001
(51) Int. Cl.: C08G 18/16

(54) **LOW MONOMER FOAM**
SCHAUMSTOFF MIT GERINGEM MONOMERENGEHALT
MOUSSE A TENEUR MONOMERE LIMITEE

(30) Priority: 31.01.2000 GB 0002175
(43) Date of publication of application: 06.11.2002
(73) Proprietor: BAXENDEN CHEMICALS LIMITED, Baxenden, Near Accrington Lancashire BB5 2SL (GB)
(72) Inventor: BICKNELL, Rodney, Nr Accrington Lancashire BB5 2SL (GB); KIRKHAM, Helen, Nr Accrington Lancashire BB5 2SL (GB); SPENCER, Richard, Nr Accrington Lancashire BB5 2SL (GB)
(74) Representative: Cresswell, Thomas Anthony
(86) International application number: PCT/GB2001/000408
(87) International publication number: WO 2001/057107

(56) References cited:
- EP-A- 0 293 211
- DE-A- 4 416 623
- US-A- 4 003 859

## Description

The present invention relates to processes for producing two component polyurethane foams utilising an isocyanate component with a reduced level of monomeric diisocyanate.

Two component foams are well known and are produced by the reaction of an isocyanate component and a polyol component. There are many other ingredients required to produce finished foam, for example blowing agents, cell stabilisers and catalysts.

Two component foams are used in a variety of applications as sound and/or vibration absorbers or dampers and as thermal insulation including in automotive assembly, white consumer goods, insulation panels, refrigeration units, void fillers and tank insulation. High levels of monomeric isocyanates are normally required to be present to produce a polyurethane foam with useful properties and sufficient mechanical strength. The curing process of such foams is an exothermic reaction, and this rise in temperature can also assist the evaporation of monomeric isocyanate. However a problem is currently encountered in applications where the material is applied in a poorly ventilated area or is "foamed-in-place". This is due to the adverse health effect of exposure to isocyanates, which is well known and a recognised concern within the industry.

Therefore there is currently difficulty in many situations where it is not possible to put in place adequate ventilation and control measures. In such cases use of conventional two component foams is usually avoided.

The present invention overcomes the above problems by providing a process for producing a useable foam from two component compositions wherein the harmful monomeric diisocyanate component has been removed at source. The monomeric diisocyanate content has previously been considered to be a necessary component to produce desirable properties such as high reactivity and rapid gelling. However, surprisingly, a useable foam can be produced using an isocyanate component with a reduced free diisocyanate level. This has been achieved through addition of a catalyst blend to the reaction mixture.

The present invention therefore provides a process for producing a two component polyurethane foam which comprises mixing
(A) a polyol resin component;
(B) an isocyanate component having a free monomeric diisocyanate content of not more than 2% by weight; and
(C) a catalyst blend, suitably comprising at least two different catalyst materials, each selected from (a) organometallic catalysts, (b) amines and (c) isocyanurate catalysts.

In a preferred embodiment of the invention a component comprising the polyol resin component (A) and the catalyst blend (C) is mixed with the isocyanate component (B).

Conventional additives may be incorporated into the foam as is customary in the art. Optionally such additives include fillers which modify foam density and/or improve vibration damping and sound insulation properties. Reinforcing fillers which do not react with the isocyanate component, such as glass and plastic fibres, talc and other non-reactive inorganic fillers, may be used for this purpose.

The catalyst blend (C) usually includes catalyst materials from each of two of the three classes (a) organometallic catalysts, (b) amines and (c) isocyanurate catalysts and preferably contains at least one member of each of these three classes. However since some catalytic species may fall into two classes simultaneously and since the classes are therefore not completely mutually exclusive it is possible to contemplate the use of only two different catalysts, both falling into the same class.

Organometallic catalysts which may be utilised in the present invention include dibutyltin dilaurate, lead napththanate, cobalt napththanate, dibutyltin dilauryl mercaptan, dibutyltin bis(isooctyl maleate), dibutyltin bis (methyl maleate), dibutyltin bis(isooctyl thioglycollate) and dibutyltin diacetate. Such catalysts when present are used in an amount of from 5 to 50% by weight of the catalyst blend.

Examples of the amine catalysts which can be used are tri(3-dimethylaminopropyl)amine), N,N,N',N",N"-pentamethyldiethylenetriamine, bis(dimethylamino) ethyl ether, dimethylcyclohexylamine, N,N,N',N'-tetramethylethylenediamine, dimethylethanolamine, 2-(2-dimethylamino ethoxy)-ethanol and triethylene diamine. These compounds when present are used in an amoum of from 5 to 85%, for instance 5 to 50 % by weight of the catalyst blend.

As used herein the term "isocyanurate catalyst" refers to materials which promote the formation of isocyanurate groups from any isocyanate that they come into contact with. Isocyanurate catalysts suitable for use in the present invention include N,N',N"-tris(3-dimethylaminopropyl) hexahydro-s-triazine, bis-(3-dimethylaminopropyl) isopropanolamine, n-(2-hydroxypropyl)-n-trimethylammonium formate and other quaternary ammonium salts, and metal salts including sodium and potassium compounds such as potassium acetate and potassium and stannous octoates. In particular, Baxcat 0, a proprietary isocyanurate catalyst supplied by Baxenden Chemicals Ltd., may be used. Such compounds when present are used in an amount of from 5 to 75 % by weight of the catalyst blend.

The catalyst blend may optionally comprise other additives, for example triethylene glycol diamine.

It is desirable for the catalyst blend to be present in a range of from 0.1 to 20%, for instance 5 to 20%, preferably 7 to 15 %, of the total weight of components (A) and (C).

The polyols of component (A) are typically hydroxyl terminated compounds with molecular weight of approximately 200 to 10000, with a hydroxyl functionality ranging from 2 to 6. Typical examples of suitable polyols are hydroxyl terminated polyoxypropylene polyols, polyesters, polycaprolactones, polyoxyethylene polyols, polytetramethylene glycols, copolymers of polyoxypropylene-polyoxyethylene polyols and Mannich bases. A formulation of component (A) may, for example, consist of 40 to 60 % polyoxypropylene triols, 15 to 35 % polyoxypropylene diols, 8 to 12 % diethanolamine, with additives such as silicones and water.

It is preferred that the isocyanate of component (B) has a free monomeric diisocyanate component of not more than 0.5% by weight.

The isocyanate component (B) can be aromatic, aliphatic, cycloaliphatic or heterocyclic materials prepared by producing dimers, trimers, oligomers or prepolymers from monomeric diisocyanate or polyisocyanate followed by a distillation process to remove any residual free monomer to less than 2.0%, preferably 0.5%, by weight. Such di- or polyisocyanate materials may be produced conventionally from, for example, ethylene diisocyanate, propylene diisocyanate, tetramethylene diisocyanate, hexamethylene diisocyanate, decamethylene diisocyanate, dodecamethylene diisocyanate, 2,4,4-trimethylhexamethylene-1,6 diisocyanate, phenylene diisocyanate, tolulene or naphthylene diisocyanate, 4,4'-methylene-bis (phenyl isocyanate), 4,4'-ethylene-bis (phenyl isocyanate), ω,ω'-diisocyanato-1,3-dimethyl benzene, ω,ω'-diisocyanato-1,4-dimethyl cyclohexane, ω,ω'-diisocyanato-1,4-dimethyl benzene, ω,ω'-diisocyanato-1,3-dimethylcyclohexane, 1-methyl-2,4-diisocyanatocyclohexane, 4,4'-methylene-bis (cyclohexyl isocyanate), 3-isocyanato-methyl-3,5,5-trimethyl cyclohexyl isocyanate, dimer acid-diisocyanate, ω,ω'-diisocyanato-diethyl benzene, ω,ω'-diisocyanatodimethyl toluene, ω,ω'-diisocyanato-diethyl toluene, fumaric acid-bis (2-isocyanato ethyl) ester or triphenyl-methane-triisocyanate, 1,4-bis(2-isocyanato-prop-2-yl)benzene, or 1,3-bis(2-isocyanato prop-2-yl)benzene. Such di- or polyisocyanate materials may have a biuret or allophanate structure or may be isocyanurates. Polyisocyanate prepolymers may be obtained by reaction of for instance an excess amount of the isocyanate with a dihydric reagent such as (i) water, (ii) a lower molecular weight polyol (molecular weight not greater than 300) or (iii) a medium molecular weight polyol (molecular weight greater than 300 and less than 10000).

The polyols of component (B) are typically hydroxyl terminated compounds with molecular weight of approximately 200 to 10000, with a hydroxyl functionality ranging from 2 to 6. Typical examples of suitable polyols are hydroxyl terminated polyoxypropylene polyols, polyesters, polycaprolactones, polyoxyethylene polyols, polytetramethylene glycols and copolymers of polyoxypropylene-polyoxyethylene polyols.

The distillation process may be carried out by any suitable conventional distillation technique appropriate for the reactivity of the isocyanates, such as wiped film distillation under reduced pressure.

Certain low residual monomer isocyanates are commercially available, for example a hexamethylene diisocyanate biuret, which can be utilised as the isocyanate component of the foam.

The components can be mixed and applied through equipment known in the art for use in the production of foams. In the case of two component foams, commercially available plural component polyurethane mixing and metering equipment may be used. For example a low output, high pressure machine equipped with a third component metering pump may be used, enabling a blowing agent to be accurately added to one of the streams, at a rate of up to 6% by volume. An example of such equipment is a positive displacement metering machine fitted with an impingement mixing head.

The mixtures obtained by a process according to the present invention have high reactivity and rapid gelling times and thus produce satisfactory polyurethane foams despite the use of an isocyanate component having low levels of monomeric diisocyanate. In particular, they conveniently, but not essentially, conform to the following specification:
Reactivity specification (Cup test at 20°C)
   Cream time = 1 to 75 seconds, for instance 1 to 20 seconds
   Gel time = 5 to 210 seconds, for instance 5 to 40 seconds
   Rise time = 10 to 360 seconds, for instance 10 to 50 seconds
   Free rise density = 10 to 600 kg.m⁻³, for instance 35 to 500 kg.m⁻³

The present invention is illustrated further by means of the following

### Examples:

### Example 1

### Product formulation

### (A) Polyol resin component and (C) Catalyst blend

| **Constituent** | **%** |
|---|---|
| Polyoxypropylated glycerol OHᵥ = 56 | 26.5 |
| Polyoxypropylated glycerol OHᵥ = 36 | 26.5 |
| Polyoxypropylated toluene diamine OHᵥ = 415 | 15.0 |
| Polyoxypropylene diol OHᵥ = 280 | 10.5 |
| Diethanolamine | 10.0 |
| B 8404 (Goldschmidt Ltd) (Polyether modified polysilicone) | 1.0 |
| Water | 0.5 |
| Triethylene glycol diamine | 2.0 |
| Dibutyltin dilaurate | 1.5 |
| Baxcat 0 (Baxenden Chemicals Ltd.) | 4.5 |
| Tri(3-dimethylaminopropyl)amine) | 2.0 |

Resin viscosity @ 20°C = 980 cps (Brookfield-Spindle 3, speed 60 rpm)
SG @ 20°C = 1.038
All ingredients are hand mixed to a homogenous solution at 20°C.
OHᵥ = hydroxyl value

### (B) Isocyanate component

| Constituent | % |
|---|---|
| Hexamethylene diisocyanate biuret | 90 |
| Propylene carbonate | 10 |

% NCO = 20.7
Viscosity @ 20°C = 1010 cps (Brookfield-Spindle 3. speed 60 rpm)
SG @ 20°C = 1.126
Both ingredients are hand mixed to a homogenous solution at 20°C.

| | |
|---|---|
| Mix ratio resin:isocyanate = | 45:55 by weight |
| | 47:53 by volume. |

Laboratory mixing of the isocyanate and resin component is carried out at 20°C using an electric drill fitted with a circular agitator, at a rotational speed of 3000 rpm.

### Results for lab mix @ 20°C

Mix size = 200 g
Mix time = 5 s

### Product specification

% NCO = 20.7 ± 0.5%
Isocyanate viscosity @ 20°C = 900 to 1100 cps (Brookfield-Spindle 3, 60 rpm) Resin viscosity @ 20°C = 900 to 1100 cps (Brookfield-Spindle 3, 60 rpm)

### Approximate reactivity (Cup test @ 20°C)

Cream = 5 to7 s
Gel = 11 to 14 s
Rise = 21 to 26 s
Density = 135 to 165 kg.m⁻³

### Example 2

The formulation of (A), (B) and (C) of Example 1 was dispensed through a mixing machine with tetrafluoroethane (4% by weight) being added via the machine to act as a cell control agent for the foam.

### Machine settings

Chemical temperature = 70°C (150°F)
Mixing pressure = 1000 psi
Cream time = Immediate
Gel time = 3 s

### Foam properties

Core density = 100 to 120 kg/m³
Closed cell content (ASTM D2856) = 3.6%
Flammability test, MVSS 302 (bum rate) = 3.05 cm/min (1.2 inches/min)
Dimensional stability (ASTM D2126):

| | % change in dimension | | | |
|---|---|---|---|---|
| Conditions | Length | Breadth | Thickness | Volume |
| 24 hrs @ 100°C | -2.18 | -1.90 | -0.36 | -4.39 |
| 24 hrs @ -15°C | -0.33 | -0.27 | +0.2 | -0.41 |

Examples 3 to 9 were carried out in accordance with the process described in Example 1 and using the component formulations specified below:

### Example 3:

(A) polyol component and (C) catalyst blend.

| **Constituent** | **%** |
|---|---|
| Polyoxypropylated glycerol OHv=36 | 26.3 |
| Polyoxypropylene diol OHᵥ = 280 | 10.5 |
| Water | 0.8 |
| B8404 (Goldschmidt Ltd.) (Polyether modified polysilicone) | 1.0 |
| Triethylene glycol diamine | 2.0 |
| Tris(3-dimethylaminopropyl)amine | 2.0 |
| Dibutyltin dilaurate | 1.5 |
| Polyoxypropylated glycerol OHv = 56 | 26.5 |
| Polyoxypropylated toluene diamine OHv=415 | 15.0 |
| Baxcat O (Baxenden Chemicals Ltd.) | 5.5 |
| Diethanolamine | 8.9 |

(B) Isocyanate component

| **Constituent** | **%** |
|---|---|
| Hexamethylene diisocyanate isocyanurate (< 0.3% free monomer) | 90.0 |
| Triethylphosphate | 10.0 |

| | |
|---|---|
| % NCO = 19.7 | |

Mix ratio, resin : isocyanate = 45 : 55 by weight
Mix time = 5 secs
Mix size = 100 g

### Approximate reactivity (cup test @ 20°C)

Cream = 6 to 10 s
Gel = 20 to 28 s
Density = 135 to 165 kgm⁻³

### Example 4:

(A) polyol component and (C) catalyst blend.

| **Constituent** | **%** |
|---|---|
| Mannich base OHv = 620 | 30.0 |
| Polyoxypropylated glycerol OHv = 56 | 51.7 |
| Triethylphosphate | 10.0 |
| Water | 0.8 8 |
| Triethylene glycol diamine | 2.0 |
| N,N,N',N",N"-pentamethyldiethylenetriamine | 2.0 |
| Dibutyltin dilaurate | 1.0 |
| B8871 (Goldschmidt Ltd.) (Polyether modified polysilicone) | 1.5 |
| B8934 (Goldschmidt Ltd.) (Polyether modified polysilicone) | 1.0 |

(B) Isocyanate component

| **Constituent** | **%** |
|---|---|
| Hexamethylene diisocyanate uretdione | 55.0 |
| (< 0.5% free monomer) | |
| Castomer E1004 (Baxenden Chemicals Ltd) | 35.0 |
| TDI prepolymer | |
| (< 0.1 % free monomer) | |
| Triethylphosphate | 10.0 |

| | |
|---|---|
| %NCO= 15.25 | |

Mix ratio, resin : isocyanate = 43 : 57 by weight
Mix time = 5 secs
Mix size = 100 g

### Approximate reactivity (cup test @ 20°C)

Cream = 15 to 20 s
Gel = 38 to 48 s
Density = 150 to 190 kgm⁻³

### Example 5:

(A) polyol component and (C) catalyst blend.

| **Constituent** | **%** |
|---|---|
| Polyoxypropylated glycerol | 41.0 |
| OHv = 36 | |
| Polyoxypropylene diol | 15.0 |
| OHv = 280 | |
| Water | 18.0 |
| Polyoxypropylated glycerol | 10.6 |
| OHv = 380 | |
| Polyoxypropylated glycerol | 9.4 |
| OHv = 660 | |
| 2-(2-dimethylaminoethoxy)-ethanol | 2.4 |
| N,N,N',N",N"-pentamethyldiethylenetriamine | 2.5 |
| SC 240 (OSI) | 1.0 |
| (Polyether modified polysilicone) | |
| Dibutyltin dilaurate | 0.1 |

(B) Isocyanate component

| **Constituent** | **%** |
|---|---|
| Hexamethylene diisocyanate uretdione | 55.0 |
| (< 0.5% free monomer) | |
| Castomer E1004 (Baxenden Chemicals Ltd) | 35.0 |
| TDI prepolymer | |
| (< 0.1 % free monomer) | |
| Triethylphosphate | 10.0 |

| | |
|---|---|
| % NCO = 15.25 | |

Mix ratio, resin : isocyanate = 30 : 70 by weight
Mix time = 10 secs
Mix size = 100 g

### Approximate reactivity (cup test @ 20°C)

Cream = 30 to 40 s
Rise = 130 to 170 s
Density = 25 to 35 kgm⁻³

### Example 6:

(A) polyol component and (C) catalyst blend.

| **Constituent** | **%** |
|---|---|
| Polyoxypropylated glycerol | 34.4 |
| OHv = 380 | |
| Polyoxypropylated glycerol | 5.33 |
| OHv = 56 | |
| Ethoxylated glycol | 5.5 |
| OHv = 56 | |
| B8871 (Goldschmidt Ltd.) | 1.5 |
| (Polyether modified polysilicone) | |
| B8934 (Goldschmidt Ltd.) | 1.5 |
| (Polyether modified polysilicone) | |
| Polyoxypropylated glycerol | 45.67 |
| OHv = 660 | |
| Water | 0.1 |
| N,N,N',N",N"-pentamethyldiethylenetriamine | 2.5 |
| 2-(2-dimethylaminoethoxy)-ethanol | 2.5 |
| Dibutyltin dilaurate | 1.0 |

(B) Isocyanate component

| **Constituent** | **%** |
|---|---|
| Hexamethylene diisocyanate uretdione | 55.0 |
| (< 0.5% free monomer) | |
| Castomer E1004 (Baxenden Chemicals Ltd) | 35.0 |
| TDI prepolymer | |
| (< 0.1% free monomer) | |
| Triethylphosphate | 10.0 |

| | |
|---|---|
| % NCO = 15.25 | |

Mix ratio, resin : isocyanate = 30 : 70 by weight
Mix time = 10 secs
Mix size = 200 g

### Approximate reactivity (cup test @ 20°C)

Cream = 55 to 75 s
Gel = 170 to 210 s
Density = 280 to 340 kcm⁻³

### Example 7:

(A) polyol component and (C) catalyst blend.

| **Constituent** | **%** |
|---|---|
| Mannich base | 30.7 |
| OHv = 620 | |
| Polyoxypropylated glycerol | 48.2 |
| OHv = 56 | |
| Triethylphosphate | 10.0 |
| Water | 0.1 |
| Triethylene glycol diamine | 2.0 |
| N,N,N',N",N"^{I}-pentamethyldiethylenetriamine | 3.0 |
| Dibutyltin dilaurate | 1.5 |
| Triethylenediamine | 1.5 |
| B8871 (Goldschmidt Ltd.) (Polyether modified polysilicone) | 1.5 |
| B8934 (Goldschmidt Ltd.) | 1.5 |
| (Polyether modified polysilicone) | |

(B) Isocyanate component

| **Constituent** | **%** |
|---|---|
| Hexamethylene diisocyanate uretdione | 55.0 |
| (< 0.5% free monomer) | |
| Castomer E1004 (Baxenden Chemicals Ltd) | 35.0 |
| TDI prepolymer | |
| (< 0.1% free monomer) | |
| Triethylphosphate | 10.0 |

| | |
|---|---|
| % NCO = 15.25 | |

Mix ratio, resin : isocyanate = 45 : 55 by weight
Mix time = 5 secs
Mix size = 100 g

### Approximate reactivity (cup test @ 20°C)

Cream = 10 to 20 s
Gel = 30 to 40 s
Density = 390 to 440 kgm⁻³

### Example 8:

Polyol component (A) and catalyst component (C) of example 7 were mixed with isocyanate component (B) described below.
(B) Isocyanate component.

| **Constituent** | % |
|---|---|
| Hexamethylene diisocyanate biuret | 90.0 |
| (< 0.5% free monomer) | |
| Propylene carbonate | 10.0 |

| | |
|---|---|
| % NCO = 20.7 | |

Mix ratio, resin : isocyanate = 53 : 47 by weight
Mix time = 5 secs
Mix size = 100 g

### Approximate reactivity (cup test @ 20°C)

Cream = 6 to 10 s
Gel = 16 to 24 s
Density = 550 to 600 kgm⁻³

### Example 9:

(A) polyol component and (C) catalyst blend.

| **Constituent** | **%** |
|---|---|
| Polyoxypropylated glycerol | 24.3 |
| OHv = 36 | |
| Polyoxypropylene diol | 10.5 |
| OHv = 280 | |
| Water | 2.0 |
| B8404 (Goldschmidt Ltd.) (Polyether modified polysilicone) | 1.0 |
| Triethylene glycol diamine | 2.0 |
| Tris(3-dimethylaminopropyl)amine | 2.0 |
| Dibutyltin dilaurate | 1.0 |
| Polyoxypropylated glycerol OHv = 56 | 24.3 |
| Polyoxypropylated toluene diamine | 15.0 |
| OHv = 415 | |
| Baxcat O (Baxenden Chemicals Ltd.) | 5.0 |
| Diethanolamine | 8.9 |
| Cyclopentane | 2.0 |
| Dimethoxymethane | 2.0 |

(B) Isocyanate component.

| **Constituent** | **%** |
|---|---|
| Hexamethylene diisocyanate biuret | 90.0 |
| (< 0.5% free monomer) | |
| Propylene carbonate | 10.0 |

| | |
|---|---|
| % NCO = 20.7 | |

Mix ratio, resin : isocyanate = 40 : 60 by weight
Mix time = 5 secs
Mix size = 100 g

### Approximate reactivity (cup test @ 20°C)

Cream = 4 to 10 s
Gel =14 to 22 s
Rise = 3 to 4 s
Density = 45 to 55 kgm⁻³

## Claims

1. A process for producing a two component polyurethane foam, which process comprises mixing
(A) a polyol resin component;
(B) an isocyanate component having a free monomeric diisocyanate content of not more than 2% by weight; and
(C) a catalyst blend comprising at least two catalytic materials selected from (a) organometallic catalysts,(b) amines and (c) isocyanurate catalysts.

2. A process according to claim 1, wherein the catalyst blend comprises an organometallic catalyst selected from dibutyltin dilaurate, lead napththanate, cobalt napththanate, dibutyltin dilauryl mercaptan, dibutyltin bis(isooctyl maleate), dibutyltin bis (methyl maleate), dibutyltin bis(isooctyl thioglycollate) and dibutyltin diacetate.

3. A process according to claim 1 or claim 2, wherein the catalyst blend comprises an amine selected from tri(3-dimethylaminepropyl)amine), N,N,N',N",N"-pentamethyldiethylenetriamine, bis(dimethylamino) ethyl ether, dimethylcyclohexylamine, N,N,N',N'-tetramethylethylenediamine, dimethylethanolamine. 2-(2-dimethylaminoethoxy)-ethanol and triethylene diamine.

4. A process according to one of the preceding claims, wherein the catalyst blend comprises an isocyanurate catalyst selected from potassium acetate, potassium octoate, N, N', N" -tris-(dimethylaminopropyl) hexahydro-s-triazine, bis-(3-dimethylaminopropyl) isopropanolamine, n-(2-hydroxypropyl)-n-trimethylammonium formate and other quaternary ammonium salts and metal salts, and Baxcat 0.

5. A process according to any one of the preceding claims wherein the polyol resin component (A) and the catalyst blend (C) are mixed with the isocyanate component (B).

6. A process according to any one of the preceding claims, wherein the isocyanate of component (B) has a free monomeric diisocyanate component of not more than 0.5% by weight.

7. A process according to any one of the preceding claims, wherein the mixture or the foam is provided into voids in components on a continuous production line or in discontinuous production.

8. A two component polyurethane foam obtainable by a process according to any one of the preceding claims.

9. Use of a foam according to claim 8, as a sound and/or vibration absorber.

10. A process for the production of a two component polyurethane foam substantially as hereinbefore described with reference to the Examples.

## Patentansprüche

1. Prozess zur Erzeugung eines zweikomponentigen Polyurethanschaums, welcher Prozess das Mischen umfasst
(A) einer Polyolharz-Komponente;
(B) einer Isocyanat-Komponente mit einem freien monomeren Düsocyanat-Gehalt von nicht mehr als 2 Gewichts-%; und
(C) eines Katalysator-Gemischs, umfassend wenigstens zwei katalytische Materialien, ausgewählt aus (a) organometallischen Katalysatoren; (b) Aminen und (c) Isocyanurat-Katalysatoren.

2. Prozess nach Anspruch 1, wobei das Katalysator-Gemisch einen organometallischen Katalysator, ausgewählt aus Dibutylzinndilaurat, Bleinaphthanat, Kobaltnaphthanat, Dibutylzinndilaurylmercaptan, Dibutylzinn-bis(isooctylmaleat), Dibutylzinn-bis(methylmaleat), Dibutylzinn-bis(isooctylthioglycollat) und Dibutylzinndiacetat, umfasst.

3. Verfahren nach Anspruch 1 oder Anspruch 2, wobei das Katalysator-Gemisch ein Amin, ausgewählt aus Tri(3-dimethylaminpropyl)amin), N,N,N',N",N"-Pentamethyldiethylentriamin, Bis(dimethylamino)ethylether, Dimethylcyclohexylamin, N,N,N',N'-Tetramethylethylendiamin, Dimethylethanolamin, 2-(2-Dimethylaminoethoxy)-ethanol und Triethylendiamin, umfasst.

4. Prozess nach einem der vorangehenden Ansprüche, wobei das Katalysator-Gemisch einen Isocyanurat-Katalysator, ausgewählt aus Kaliumacetat, Kaliumoctoat, N,N',N"-Tris(dimethylaminopropyl)hexahydro-s-triazin, Bis-(3-dimethylaminopropyl)isopropanolamin, n-(2-Hydroxypropyl)-n-trimethylammoniumformat und andere quaternäre Ammoniumsalze und Metallsalze, und Baxcat O umfasst.

5. Prozess nach einem der vorangehenden Ansprüche, wobei die Polyolharz-Komponente (A) und das Katalysator-Gemisch (C) mit der Isocyanat-Komponente (B) vermischt werden.

6. Prozess nach einem der vorangehenden Ansprüche, wobei das Isocyanat der Komponente (B) eine freie monomere Düsocyanat-Komponente von nicht mehr als 0,5 Gewichts-% aufweist.

7. Prozess nach einem der vorangehenden Ansprüche, wobei das Gemisch oder der Schaum in Leerräume in Komponenten auf einem kontinuierlichen Produktionsband oder in der diskontinuierlichen Produktion eingebracht wird.

8. Zweikomponentiger Polyurethanschaum, erhältlich mittels eines Prozess' nach einem der vorangehenden Ansprüche.

9. Verwendung eines Schaums nach Anspruch 8, als einem Schall- und/oder Vibrationsabsorber.

10. Prozess zur Erzeugung eines zweikomponentigen Polyurethanschaums, wie im Wesentlichen im Vorangegangenen unter Bezugnahme auf die Beispiele beschrieben.

## Revendications

1. Procédé pour fabriquer une mousse de polyuréthanne à deux constituants, ce procédé comprenant le mélange
(A) d'un constituant résine de polyol ;
(B) d'un constituant isocyanate ayant une teneur en diisocyanate monomère libre non supérieure à 2 % en poids ; et
(C) d'un mélange de catalyseurs comprenant au moins deux matériaux catalytiques choisis parmi (a) les catalyseurs organométalliques, (b) les amines et (c) les catalyseurs isocyanurates.

2. Procédé selon la revendication 1, dans lequel le mélange de catalyseurs comprend un catalyseur organométallique choisi parmi le dilaurate de dibutylétain, le naphtanate de plomb, le naphtanate de cobalt, le dibutylétain dilauryl mercaptan, le dibutylétain bis(maléate d'isooctyle), le dibutylétain bis(maléate de méthyle), le dibutylétain bis(thioglycolate d'isooctyle) et le diacétate de dibutylétain.

3. Procédé selon la revendication 1 ou la revendication 2, dans lequel le mélange de catalyseurs comprend une amine choisie parmi la tri(3-diméthylaminepropyl)amine), la N,N,N',N",N"-pentaméthyldiéthylènetriamine, l'éther bis(diméthylamino)éthylique, la diméthylcyclohexylamine, la N,N,N',N'-tétraméthyléthylènediamine, la diméthyléthanolamine, le 2- (2-diméthylaminoéthoxy)éthanol et la triéthylènediamine.

4. Procédé selon l'une quelconque des revendications précédentes, dans lequel le mélange de catalyseurs comprend un catalyseur isocyanurate choisi parmi l'acétate de potassium, l'octoate de potassium, la N,N',N"-tris-(diméthylaminopropyl)hexahydro-s-triazine, la bis-(3-diméthylaminopropyl)isopropanolamine, le formiate de n-(2-hydroxypropyl)-n-triméthylammonium et d'autres sels d'ammonium quaternaire et sels métalliques, et le Baxcat 0.

5. Procédé selon l'une quelconque des revendications précédentes, dans lequel le constituant résine de polyol (A) et le mélange de catalyseurs (C) sont mélangés avec le constituant isocyanate (B).

6. Procédé selon l'une quelconque des revendications précédentes, dans lequel l'isocyanate du constituant (B) a un constituant diisocyanate monomère libre à pas plus de 0,5 % en poids.

7. Procédé selon l'une quelconque des revendications précédentes, dans lequel le mélange ou la mousse est fourni(e) dans des vides dans les constituants sur une chaîne de production continue ou en production discontinue.

8. Mousse de polyuréthanne à deux constituants susceptible d'être obtenue par un procédé selon l'une quelconque des revendications précédentes.

9. Utilisation d'une mousse selon la revendication 8, sous la forme d'un absorbant sonore et/ou de vibrations.

10. Procédé pour la fabrication d'une mousse de polyuréthanne à deux constituants essentiellement comme décrit ci-dessus avec référence aux Exemples.
